(19) Europäisches Patentamt
European Patent Office
Office européen des brevets

(11) **EP 4 625 977 A1**

(12) **EUROPEAN PATENT APPLICATION**

(43) Date of publication:
01.10.2025 Bulletin 2025/40

(21) Application number: 24166514.0

(22) Date of filing: 26.03.2024

(51) International Patent Classification (IPC):
H04N 19/105 (2014.01)    H04N 19/11 (2014.01)
H04N 19/159 (2014.01)    H04N 19/176 (2014.01)
H04N 19/196 (2014.01)    H04N 19/503 (2014.01)
H04N 19/593 (2014.01)

(52) Cooperative Patent Classification (CPC):
H04N 19/11; H04N 19/105; H04N 19/159;
H04N 19/176; H04N 19/196; H04N 19/503;
H04N 19/593

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Beijing Xiaomi Mobile Software Co.,
Ltd.
Beijing 100085 (CN)

(72) Inventors:
• GHAZNAVI YOUVALARI, Ramin
Beijing, 100085 (CN)
• ABDOLI, Mohsen
Beijing, 100085 (CN)

(74) Representative: Schenk, Markus et al
Schoppe, Zimmermann, Stöckeler
Zinkler, Schenk & Partner mbB
Patentanwälte
Radlkoferstrasse 2
81373 München (DE)

(54) **METHOD AND APPARATUS FOR OCCURRENCE-BASED INTRA CODING, AND ENCODER/ DECODER INCLUDING THE SAME**

(57) The present application describes a method of block-based decoding of a picture (102), the method comprising: determining second block(s) (234, 236), wherein the second block(s) is in the neighborhood (232) of a first block (230); construing a list (222) of regular intra prediction modes, RIPM, for the first block, based on the second block(s), the construing including deriving at least one of regular intra prediction modes in the list by subjecting a certain block among the second block(s) to a texture analysis; reconstructing the first block using the list.

Fig. 8

## Description

## Technical Field

The present disclosure generally relates to the field of encoding/decoding pictures, images or videos, and embodiments of the present disclosure concern improvements regarding the intra prediction, more specifically, improvements regarding occurrence-based intra coding.

## Background

The encoding and decoding of a picture, an image or a video is performed in accordance with a certain standard, for example, in accordance with the advanced video coding, AVC standard (see reference [1]), the high efficiency video coding, HEVC, standard (see reference [2]) or the versatile video coding, VVC, standard (see reference [3]).

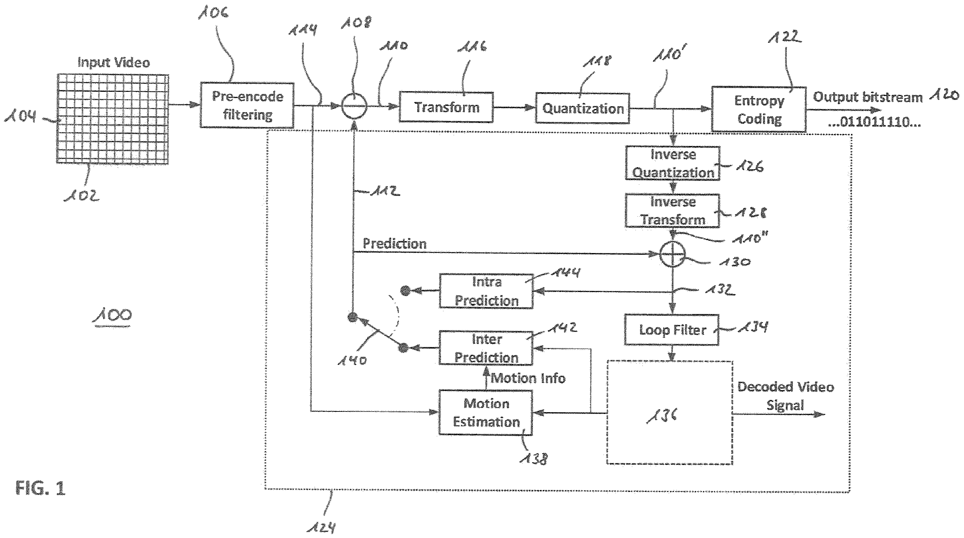

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 132 that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 132. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

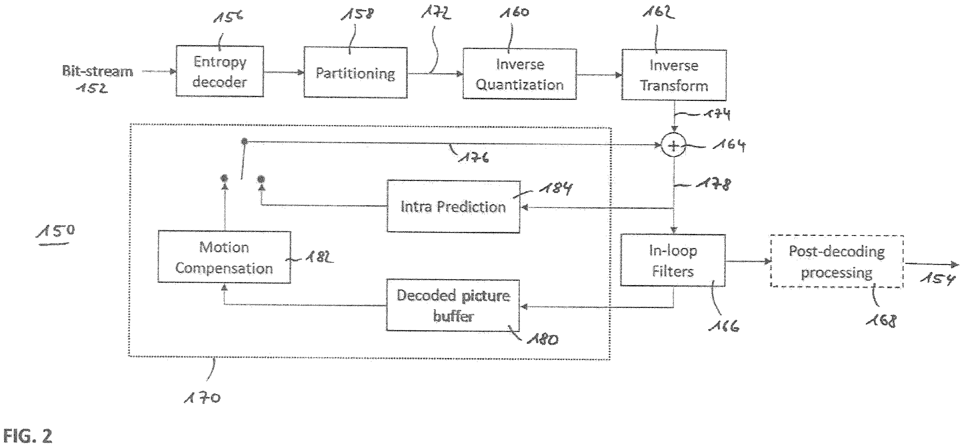

Fig. 2 is a block diagram of a video decoder 150 for predictively decoding from a data stream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bit stream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 164. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above steps, the entropy encoding or entropy decoding of syntax elements representing decisions at the encoder side such as block partitioning information, prediction modes/parameters, quantized transform coefficients, etc. is typically carried out by using a context-adaptive entropy coding, such as Context-Adaptive Binary Arithmetic Coding (CABAC). To use CABAC, each syntax element is binarized to be represented with a series of bins and each bin is associated with a CABAC context model, that keeps track of binary values of that particular bin in the past, in order to more efficiently model its probability distribution.

In the current VVC design, for MTS, only DST7 and DCT8 transform kernels are utilized which are used for intra and inter coding. At the transform coding in enhanced compression model (ECM) additional primary transforms including DCT5, DST4, DST1, and the identity transform (IDT) are employed. Also, MTS set is made dependent on the TU size and intra mode information. For blocks predicted via IntraTMP, DIMD (decoder-side intra mode derivation) process is used on the prediction block to derive an intra mode that is used for transform selection. Specifically, a horizontal gradient and a vertical gradient are calculated for each predicted sample to build a HoG. Then the intra prediction mode with the largest histogram amplitude values is used to the MTS transform set. Overall, 16 different TU sizes are considered, and for each TU size 5 different classes are considered depending on intra-mode information. For each class, 1, 4 or 6 different transform pairs are considered. Number of intra MTS candidates are adaptively selected (between 1, 4 and 6 MTS candidates) depending on the sum of absolute value of transform coefficients. The sum is compared against the two fixed thresholds, i.e. a first threshold $th_0$ and a second threshold thi, to determine the total number of allowed MTS candidates:

1 candidate:

$$sum \leq th_0$$

4 candidates:

$$th0 < sum \leq th_1$$

6 candidates:

$$sum > th_1$$

Note, although a total of 80 different classes are considered, some of those different classes often share exactly same transform set. So there are 58 (less than 80) unique entries in the resultant LUT. For angular modes, a joint symmetry over TU shape and intra prediction is considered. So, a mode i (i > 34) with TU shape A×B will be mapped to the same class corresponding to the mode j = (68 - i) with TU shape B×A. However, for each transform pair the order of the horizontal and vertical transform kernel is swapped. For example, for a 16x4 block with mode 18 (horizontal prediction) and a 4x16 block with mode 50 (vertical prediction) are mapped to the same class. However, the vertical and horizontal transform kernels are swapped. For the wide-angle modes the nearest conventional angular mode is used for the transform set determination. For example, mode 2 is used for all the modes between -2 and -14. Similarly, mode 66 is used for mode 67 to mode 80.

There might be a Low Frequency Non-Separable Transform (LFNST) extension with large kernel in ECM, e.g., the LFNST design in VVC is extended as follows:

• The number of LFNST sets (S) and candidates (C) are extended to S=35 and C=3, and the LFNST set (lfnstTrSetIdx) for a given intra mode (predModeIntra) is derived according to the following formula:

$$\text{For predModeIntra} < 2, \text{lfnstTrSetIdx is equal to } 2$$

$$\text{lfnstTrSetIdx} = \text{predModeIntra, for predModeIntra in } [0,34]$$

$$\text{lfnstTrSetIdx} = 68 - \text{predModeIntra, for predModeIntra in } [35,66]$$

- Three different kernels, LFNST4, LFNST8, and LFNST16, are defined to indicate LFNST kernel sets, which are applied to 4xN/Nx4 (N≥4), 8xN/Nx8 (N≥8), and M×N (M, N≥16), respectively.

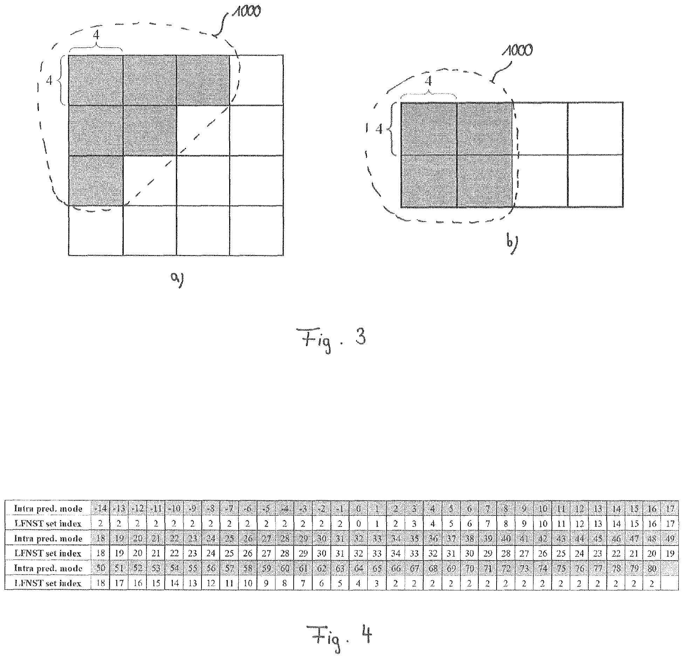

The kernel dimensions are specified by:
(LFSNT4, LFNST8*, LFNST16*) = (16x16, 32x64, 32x96) The forward LFNST is applied to top-left low frequency region, which is called Region-Of-Interest (ROI). When LFNST is applied, primary-transformed coefficients that exist in the region other than ROI are zeroed out, which is not changed from the VVC standard. The ROI 1000 for LFNST16 is depicted in figure 3a. It consists of six 4x4 sub-blocks, which are consecutive in scan order. Since the number of input samples is 96, transform matrix for forward LFNST16 can be Rx96. R is chosen to be 32 in this contribution, 32 coefficients (two 4x4 sub-blocks) are generated from forward LFNST16 accordingly, which are placed following coefficient scan order. The ROI 1000 for LFNST8 is shown in figure 3b. The forward LFNST8 matrix can be Rx64 and R is chosen to be 32. The generated coefficients are located in the same manner as with LFNST 16. The mapping from intra prediction modes to these sets, i.e. to a LFNST set index, is shown in the Table in Fig. 4.

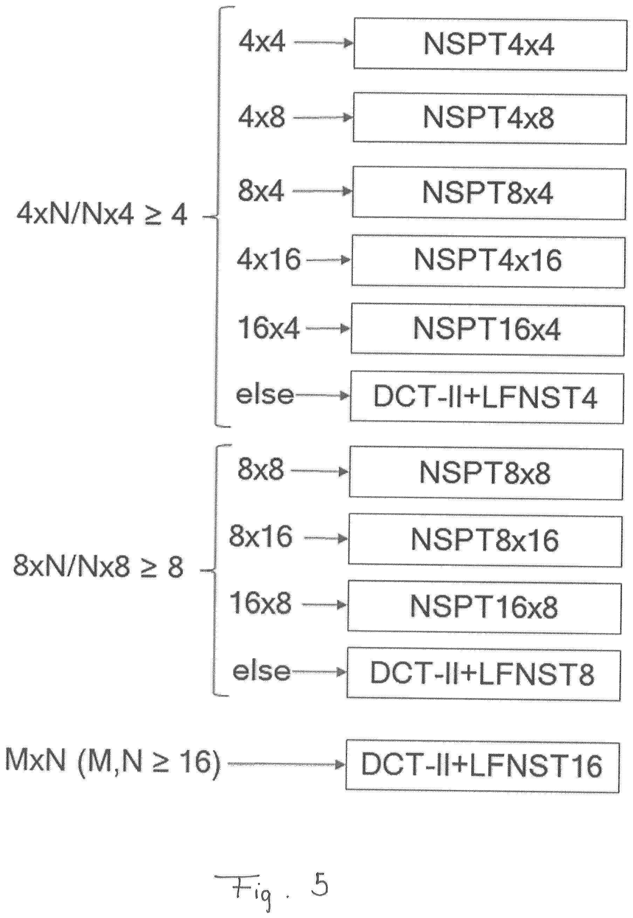

The separable DCT-II plus LFNST transform combinations can be replaced with a non-separable primary transform (NSPT) for intra coding for the block shapes 4x4, 4x8, 8x4 and 8x8, 4x16, 16x4, 8x16 and 16x8. The affected block sizes are summarized in figure 5. All NSPTs consist of 35 sets and 3 candidates, e.g., similar to the current LFNST. The kernels of NSPTs may have the following shapes:

- NSPT4x4: 16x16

- NSPT4x8/NSPT8x4: 32x20

- NSPT8x8: 64x32

- NSPT4x16/NSPT16x4: 64x24

- NSPT8x16/NSPT16x8: 128x40

- NSPT4x32/NSPT32x4: 128x20

- NSPT8x32/NSPT32x8: 256x24

Therefore, 12, 32, 40 and 88 coefficients are zeroed-out using NSPT4x8/NSPT8x4, NSPT8x8, NSPT4x16/NSPT16x4 and NSPT8x16/NSPT16x8 respectively. For NSPT4x32/NSPT32x4 and NSPT8x32/NSPT32x8, remaining 108 and 232 positions in each transform block are zeroed-out, respectively.

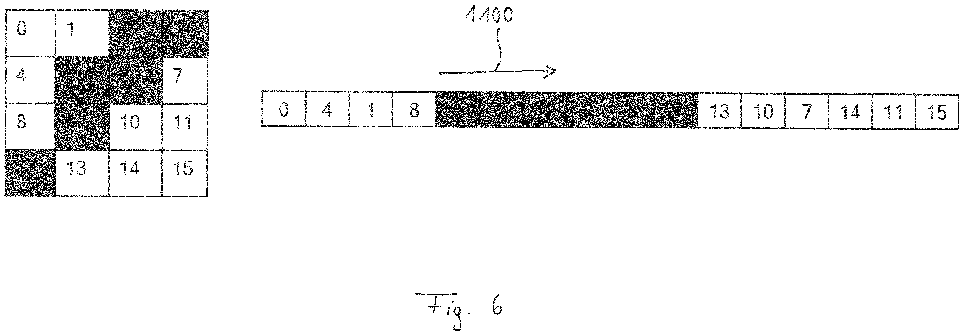

It is additionally, or alternatively, possible to use NSPT/LFNST context modeling for transform coefficient coding, see figure 6. For coding of LFNST/NSPT coefficients, modified context models using the previous 5 coefficients in the coding order 1100 are used for context derivation instead of the 2D coefficient neighborhood. The lfnstIdx is signalled after all last_sig_coeff_pos syntax elements in a CU since lfsntIdx is required for parsing the transform coefficients.

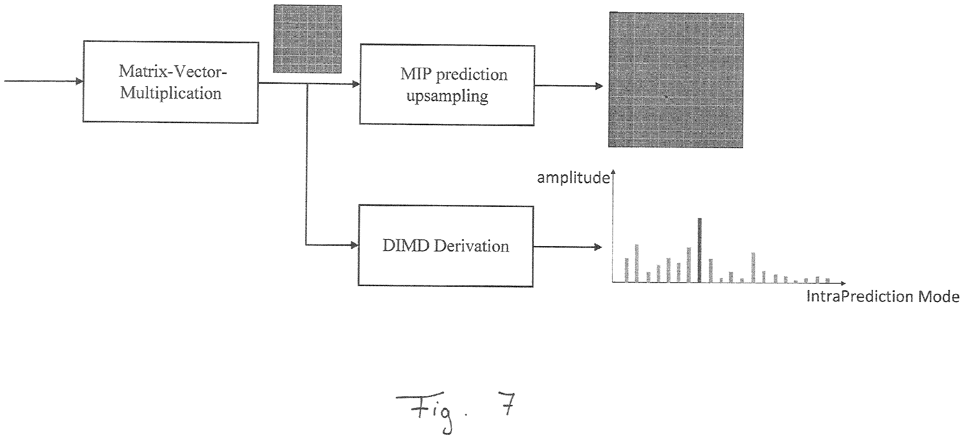

Additionally, or alternatively it is possible to utilize LFNST/NSPT for MIP, intraTMP and inter coding. To utilize LFNST/NSPT for MIP, intraTMP and inter coding, a virtual intra prediction mode (VIPM) is employed. Each VIPM represents a kind of feature, for example, a specific direction. The VIPM is derived by applying a DIMD-like process, to the prediction block. The horizontal and vertical gradients of pixels inside the prediction block are calculated with Sobel operator and the horizontal and vertical gradients of each pixel are used to derive a direction. The amplitudes of the gradient of each pixel are accumulated for the corresponding direction. The intra prediction mode corresponding to the strongest accumulation is selected as the VIPM. With the VIPM, the transform set of LFNST/NSPT can be derived. For MIP, the DIMD-like process is done before upsampling. Specifically, a horizontal gradient and a vertical gradient are calculated for each predicted sample to build a HoG, as shown in figure 7. Then the intra prediction mode with the largest histogram amplitude values is used to determine the LFNST transform set and LFNST Transpose flag. For inter coding, the kernel mapping method is the same as that for intra LFNST/NSPT.

As discussed above an encoder 100 may comprise an intra predictor 144 and/or a decoder 150 may comprise an intra predictor 184. The intra predictors 144 and 148 may support Occurrence-based intra coding (OBIC). The Occurrence-based intra coding (OBIC) proposes a method for block intra prediction in video coding, in which a list called the "occurrence list" of eligible prediction modes is defined on a causal neighbourhood around a current block. In OBIC method, the modes (aka "element") in the occurrence list are associated with an "occurrence weight", which quantifies how much that mode has been used in the blocks of the causal neighbourhood. The list can then serve differently to determine which mode(s) should be used for current block.

**Summary**

In prior art approaches, inter predicted neighboring blocks and intra predicted blocks associated with a non-regular intra prediction mode are ignored when determining an occurrence list for a coding, i.e. an encoding and/or a decoding, of a current block which is associated with occurrence-based intra coding. However, ignoring neighboring blocks could result in a poor statistic and thus in a not optimal selection of the prediction mode for a current block. Further, the restricted consideration of a neighborhood of a current block may not account for possible texture similarities between blocks associated with non-regular intra prediction modes and blocks associated with regular intra prediction modes, which results in a less faithful intra predictor.

The present disclosure addresses the above drawbacks by calculating a virtual intra prediction mode for a neighboring block that is not coded using a conventional intra prediction mode and considering the virtual intra prediction mode in the occurrence list. This is based on the finding that a texture of a block could be an indication for a regular intra prediction mode suitable for the respective block, even if the respective block is actually predicted using a non-regular intra prediction mode. Thereby, the determined occurrence list generates an intra predictor that is more suitable for the current block to be predicted, thereby improving the prediction accuracy.

The present disclosure provides a method of block-based decoding of a picture, the method comprising:

determining second block(s), wherein the second block(s) is in the neighborhood of a first block;
construing a list of regular intra prediction modes, RIPM, for the first block, based on the second block(s), the construing including deriving at least one of regular intra prediction modes in the list by subjecting a certain block among the second block(s) to a texture analysis;
reconstructing the first block using the list.

Optionally, the regular intra prediction modes comprise

at least one of a DC and/or planar mode,
a number of directional modes.

Optionally, the construing the list of regular intra prediction modes comprises, for each of the second block(s), checking whether the respective second block is decoded using a regular intra prediction mode,

if the respective second block is decoded using a regular intra prediction mode, populating the list with the regular intra prediction mode, and
if the respective second block is decoded without any regular intra prediction mode, deriving a virtual regular intra prediction mode by the texture analysis and populating the list with the virtual regular intra prediction mode.

Optionally, the construing the list of regular intra prediction modes comprises, populating the list in such a manner that each of the regular intra prediction modes of the list differs from all other regular intra prediction modes in the list, and determining, for each of the regular intra prediction modes of the list, an occurrence weight depending on which number of second blocks out of the second block(s) in the neighborhood of the first block

used the respective regular intra prediction mode of the list for decoding or resulted in the respective intra prediction mode as virtual intra prediction mode by means of the texture analysis, and/or
depending on a sum of block sizes formed over the number of second blocks out of the second block(s), which used the respective regular intra prediction mode of the list for decoding or resulted in the respective intra prediction mode as virtual intra prediction mode by means of the texture analysis, and/or
depending on a weight at which the respective regular intra prediction mode contributed to a reconstruction of the second block(s), and/or
depending on, for each of the second block(s) in the neighborhood of the first block, whether the respective second block used the respective regular intra prediction mode of the list for decoding or

whether the respective second block resulted in the respective regular intra prediction mode as virtual regular intra prediction mode by means of the texture analysis.

Optionally, the subjecting the certain block to the texture analysis comprises determining local gradients determined at a number of pixels of the certain block, and determining the at least one regular intra prediction mode for the certain block based on the local gradients.

Optionally, the subjecting the certain block to the texture analysis comprises determining for each of candidate regular intra prediction modes a prediction error by applying the respective candidate regular intra prediction mode to a first portion within, or neighboring, the certain block so as to predict a second portion within, or neighboring, the certain block and measuring the prediction error with respect to the second portion, and determining the at least one regular intra prediction mode for the certain block based on the prediction error.

Optionally, the method further comprises

construing an alternative list of intra prediction modes for the first block,
decoding one or more tool-selection syntax elements for the first block from a data stream, depending on the one or more tool-selection syntax elements, selecting one of a plurality of intra-coding tools for the first block,
if the selected intra-coding tool is a first tool, reconstructing the first block using an intra-prediction mode selected out of the alternative list of intra prediction modes; and if the selected intra-coding tool is a second tool, reconstructing the first block using the list of regular intra prediction modes,
wherein the construing the list of regular intra prediction modes comprises,
excluding from the list any regular intra-prediction mode contained in the alternative list of intra prediction modes, or determining, for each of the regular intra prediction modes of the list, an occurrence weight depending on whether the respective regular intra prediction mode is contained in the alternative list of intra prediction modes.

Optionally, the method further comprises

construing a list of most probable intra prediction modes for a third block,
decoding one or more tool-selection syntax elements for the third block from a data stream, depending on the one or more tool-selection syntax elements, selecting one of a plurality of intra-coding tools for the third block,
if the selected intra-coding tool is a first tool, decoding from the data stream a pointer and reconstructing the third block using an intra-prediction mode selected out of the list of most probable intra prediction modes using the pointer, wherein the construing the list of most probable intra prediction modes for the third block comprises populating the list of most probable intra prediction modes with one or more of the regular intra-prediction modes in the list construed for the first block.

Optionally, the construing the list of most probable intra prediction modes for the third block comprises populating the list of most probable intra prediction modes with a regular intra-prediction mode in the list conditionally depending on whether the regular intra-prediction mode in the list has associated therewith a occurrence weight which meets a predetermined criterion.

Optionally, the reconstructing the first block using the list comprises

applying a subset of regular intra prediction modes out of the list of regular intra prediction modes to the first block to obtain a partial predictor for each regular intra prediction mode of the subset and
subjecting the partial predictors to a weighted summation to yield a predictor for the first block, wherein each partial predictor is weighted using a corresponding fusion weight, determining the fusion weights of the partial predictors based on occurrence weights associated with the subset of regular intra prediction modes.

Optionally, the method further comprises

determining one or more further partial predictors by
associating the first block with at least one further regular intra prediction mode by determining local gradients at a number of pixels in a neighborhood of the first block, and
determining the at least one further regular intra prediction mode based on the local gradients., and
applying the at least one further regular intra prediction mode to the first block to obtain a further partial predictor for each of the at least one further regular intra prediction mode or motion vector based prediction;
further subjecting, to the weighted summation, the further partial predictor for each of the at least one further regular intra prediction.

The present disclosure also provides a method of block-based encoding of a picture, the method comprising:

determining second block(s), wherein the second block(s) is in the neighborhood of a first block; construing a list of regular intra prediction modes, RIPM, for the first block, based on the second block(s), the construing including deriving at least one of regular intra prediction modes in the list by subjecting a certain block among the second block(s) to a texture analysis; encoding the block using the list.

The present disclosure provides an apparatus for block-based decoding of a picture the apparatus comprising:

a second block(s) determining module configured to determine second block(s), wherein the second block(s) is in the neighborhood of a first block; a list construing module configured to construe a list of regular intra prediction modes, RIPM, for the first block, based on the second block(s), the construing including deriving at least one of regular intra prediction modes in the list by subjecting a certain block among the second block(s) to a texture analysis; a reconstruction module configured to reconstruct the block using the list.

The present disclosure also provides an apparatus for block-based encoding of a picture, the apparatus comprising:

a second block(s) determining module configured to determine second block(s), wherein the second block(s) is in the neighborhood of a first block; a list construing module configured to construe a list of regular intra prediction modes, RIPM, for the first block, based on the second block(s), the construing including deriving at least one of regular intra prediction modes in the list by subjecting a certain block among the second block(s) to a texture analysis; an encoding module configured to encode the block using the list.

The present disclosure provides a data stream having a picture encoded thereinto using the inventive method of block-based encoding of a picture as mentioned above.

It is to be understood that the content described in this section is not intended to identify key or critical features of the embodiment of the present disclosure, nor is it intended to limit the scope of the present disclosure. Other features of the present disclosure become readily apparent from the following description.

## Brief Description of the Drawings

The drawings are explanatory and serve to explain the present disclosure, and are not to be construed to limit the present disclosure to the illustrated embodiments.

Fig. 1     is a block diagram of a conventional video encoder;
Fig. 2     is a block diagram of a conventional video decoder;
Fig. 3a    illustrates a ROI for LFNST16;
Fig. 3b    illustrates a ROI for LFNST8;
Fig. 4     is a table for a mapping of intra prediction modes to LFNST set index;
Fig. 5     illustrates an overview of proposed NSPTs among existing LFNSTs;
Fig. 6     illustrates a context modeling for LFNST/NSPT coefficients;
Fig. 7     illustrates an example of MIP prediction samples to build a HoG;
Fig. 8     illustrates an example of a casual neighborhood of a current block;
Fig. 9     illustrates a schematic view of an occurrence list;
Fig. 10    illustrates an example of element weighting in an occurrence list;
Fig. 11    illustrates an example of deriving VIPM modes of an intraTMP block from the prediction samples;
Fig. 12    illustrates a combined OBIC and DIMD list; and
Fig. 13    illustrates a block diagram illustrating an electronic device 900 according to embodiments of the present disclosure.

## Detailed Description

Illustrative embodiments of the present disclosure are described below with reference to the drawings, where various details of the embodiments of the present disclosure are included to facilitate understanding and should be considered as illustrative only. Accordingly, those of ordinary skill in the art will recognize that various changes and

**EP 4 625 977 A1**

modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

The Occurrence-based intra coding as described in the introductory portion is sub-optimal when the available blocks in the causal neighbourhood are coded in inter prediction modes or in non-regular intra prediction modes such as IBC, intraTMP and MIP. Since such blocks do not associate with any intra prediction modes (IPMs), their information may not be directly used when generating the IPM-based occurrence list from the neighbour.

To further improve the Occurrence-based intra coding process, the herein discussed disclosure proposes methods for improving the performance of occurrence-based intra coding (OBIC) methods. It is proposed to calculate one or more virtual intra prediction modes (VIPMs) for the blocks that are not coded in conventional intra prediction modes, which are also understood as regular intra prediction modes. The calculated VIPMs are then used in occurrence-based intra prediction mode generation. In some other aspects, it is proposed to combine IPM-based, i.e. intra-prediction-based, and BV-based OBIC modes for generating block prediction. In some aspects, it is proposed to exclude some IPMs or their occurrence in OBIC method in interaction with existing prediction tools in the codec.

In the present disclosure, the Regular Intra Prediction Modes (RIPM) may comprise at least one of a DC and/or planar mode, and a number of directional modes. For example, there are 67 IPMs (Intra prediction modes) in VVC, including 65 angular modes, i.e. directional modes, and two modes for plain content. There are also tools that rely on one or more IPMs for prediction. For example, DIMD, TIMD, SGPM.

In the present disclosure, an Intra Coding Tool (ICT) is a sub-algorithm of the underlying codec for encoding or decoding one intra block. In VVC, there are roughly two categories of ICTs: ICTs based on RIPM and ICTs that are non-RIPM. Non-RIPMs, on the other hand, do not rely on RIPMs for prediction of block's pixels. Alternatively, they have their own mechanism to compute pixel prediction. For example, MIP, IBC, intraTMP, EIP, CCLM, CCCM, PLT. For further information on each non-RIPM ICT, refer to the state-of-the-art. Below is the list of important ECM ICTs in each category.

- Based on Regular Intra Prediction Mode (RIPM):
- Decoder-side Intra Mode Derivation (DIMD)
- Template-based Intra Mode Derivation (TIMD)
- Spatial Geometric Prediction Mode (SGPM)
- Most Probable Mode Coded (MPMC)
- Matrix-based Intra Prediction (MIP)
- Intra Block Copy (IBC)
- Intra template-based prediction (IntraTMP)
- Palette mode (PLT)
- Cross Component Prediction (CCP)
- Extrapolation-based intra prediction (EIP) (JVET-AG0058)

In the following, various examples are described which may assist in achieving a more effective compression when using occurrence-based intra coding (OBIC) methods. The occurrence-based intra prediction may be added to other intra-prediction modes heuristically designed, for instance, or may be provided exclusively.

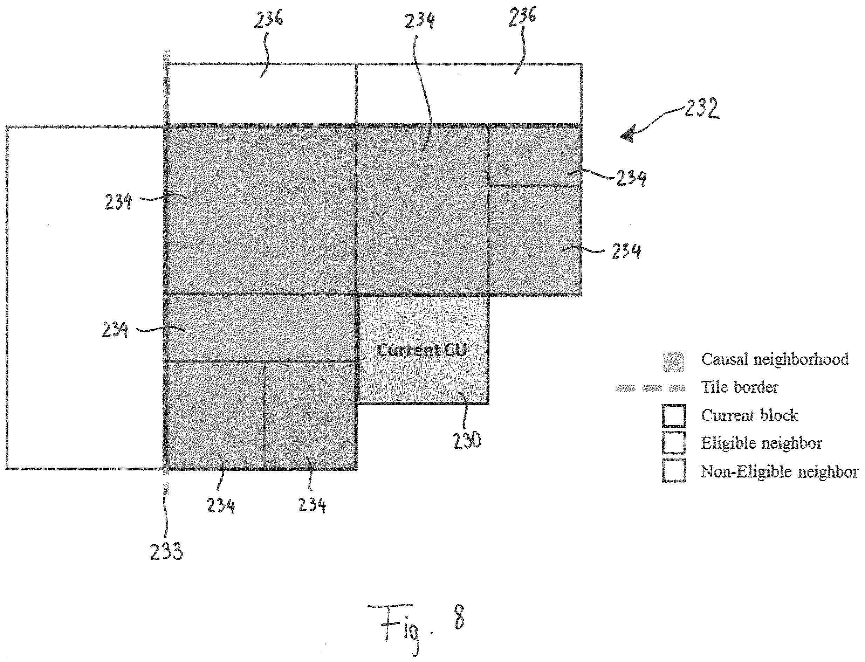

Given a current block 230 to be coded, e.g., see Fig. 8, OBIC visits a set of at least one block in the causal neighborhood 232 that is already coded with one of the Intra Coding Tools (ICT). The limits of the causal neighborhood 232 may depend on the scanning order of the underlying codec (e.g. raster) as well as independent areas defined by tools, e.g. Tiles, Slices, Sub-pictures etc., e.g., see the tile border 233. The causal neighborhood 232 might include both adjacent and non-adjacent neighboring blocks. An adjacent neighboring block is a block that shares at least one pixel of border with current block. On the contrary, a non-adjacent neighboring block shares no pixel of border with current block 230. Moreover, the causal neighborhood 232 takes into account a concept of eligibility. Depending on the specific design of OBIC (elaborated below), rules to identify eligible blocks can vary. In general, an eligible block in the causal neighborhood is a block whose ICT can be considered by the specific design of OBIC to be used for the current block. For instance, if an OBIC design operates only based on Regular Intra Prediction Mode (RIPM), then only RIPM coded blocks in the causal neighborhood must be visited. Depending on the design of OBIC algorithm, the order in which eligible blocks on the causal

8

neighborhood are visited might or might not be arbitrary. It is also possible that all blocks in the neighborhood 232 are eligible blocks. For example, a preferred embodiment of the disclosure enables to visit all neighboring blocks, also the ones not coded using RIPM, even for an OBIC design that operates only based on Regular Intra Prediction Mode (RIPM). This is due to the fact that the inventors found that also neighboring blocks which are not coded using RIPM could provide information on an RIPM for the current block 230. Figure 8 shows an example of a casual neighborhood 232 that is limited by Tiles and contains both adjacent and non-adjacent neighboring blocks, where some of them are not eligible.

Fig. 8 shows, for example, one or more previously decoded blocks, e.g., indicated by the reference numerals 234 and 236, in a neighborhood 232 of a current block 230, which could also be regarded as a predetermined intra-predicted block. The one or more previously decoded blocks may comprise blocks 234, which are coded using one or more regular intra prediction modes, and further blocks 236, which are coded using one or more non-regular intra prediction modes or one or more inter prediction modes.

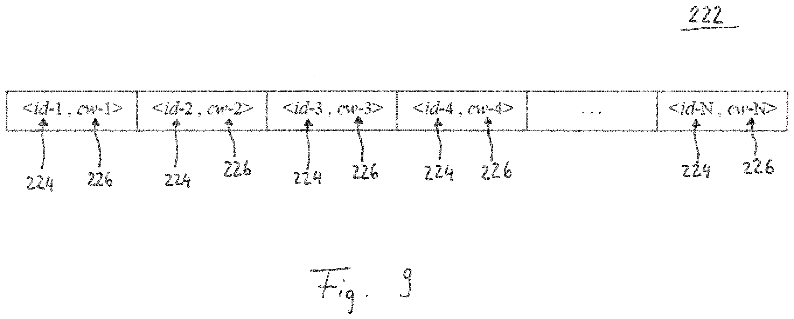

Once the causal neighborhood 232 is identified, an empty list named the occurrence list 222 with respect to the description of the figures is initialized, e.g., see Fig. 9. This list is to be progressively filled with some "elements", where each element is a pair of a unique identifier "id" 224 and its occurrence weight "cw" 226. The elements are extracted from visited coded blocks on the causal neighborhood 232 and as the name suggests, each unique id 224 can appear at most once in the occurrence list 222. Figure 9 shows a schematic view of an occurrence list 222 that has been filled after visiting all eligible blocks on the causal neighborhood 232.

The definition of id 224 of an element depends on the underlying design of OBIC. For example, in an OBIC design that operates on RIPMs, the identifier, i.e. the id 224, to extract from the neighboring block, i.e. from one of the one or more previously decoded blocks 234 and/or 236, might be the index of IPM (e.g. between 0 and 66 in VVC) that is used for intra coding of that block. This IPM might come from different intra coding tools such as DIMD, TIMD, MPMC etc. Moreover, in an OBIC design that operates on non-RIPMs, the identifier might be the type of ICT that is used for that neighboring block, such as IBC, IntraTmp, MIP etc.

Each element id 224 is associated with one occurrence weight 226 in the occurrence list 222. This weight 226 may be computed as the accumulation of several individual occurrence weights or "icw", where each icw is computed when a new neighboring block with identifier id 224 is visited. In other words, if element id 224 was visited four times during the causal visits, four icw values are summed to give the cw 226 of id 224 in the occurrence list 222. The ocw can alternatively be computed using different methods.

For instance, let 'A' be an 8×8 block that is coded by a single IPM of Planar (e.g. hence id 224: PLANAR_IDX), using the MPMC intra coding tool and is currently being visited in the causal neighborhood 232. That is to say, OBIC should either add a new element with id 224 of PLANAR_IDX, or update its occurrence weight cw if its id 224 already exists in the occurrence list 222. Either way, an individual occurrence weight ocw should be computed for the element "PLANAR_IDX" based on block A. The simplest individual weight is the occurrences in terms of number of blocks. In other words, visiting "PLANAR_IDX" on block A would give ocw=1 which increases its cw 226 by the value ' 1'. For example, for each of the predetermined regular intra prediction modes, indicated by id 224, of the occurrence list 222, an occurrence weight 226 can be determined depending on which number of previously decoded blocks out of the one or more previously decoded blocks in the neighborhood 232 of the predetermined intra-predicted block, i.e. the current block 230, used the respective predetermined regular intra prediction mode of the occurrence list 222 for decoding or got associated with the respective predetermined regular intra prediction mode by means of a texture analysis. In other words, for each of the predetermined regular intra prediction modes, indicated by id 224, of the occurrence list 222, an occurrence weight 226 can be determined as a sum of the number of previously decoded blocks 234, which are coded using the respective predetermined regular intra prediction mode of the occurrence list 222, and the number of further previously decoded blocks 236, which got associated with the respective predetermined regular intra prediction mode by means of a texture analysis.

Alternatively, one might compute individual weight by the number of pixels of block A. In this case, visiting "PLANAR_IDX" on block A would give ocw=8×8=64 which increases its cw 226 by the value 64. For example, for each of the predetermined regular intra prediction modes, indicated by id 224, of the occurrence list 222, an occurrence weight 226 can be determined depending on a sum of block sizes formed over the number of previously decoded blocks out of the one or more previously decoded blocks, which use the respective predetermined regular intra prediction mode of the occurrence list for decoding or get associated with the respective predetermined regular intra prediction mode by means of the texture analysis. In other words, for each of the predetermined regular intra prediction modes, indicated by id 224, of the occurrence list 222, an occurrence weight 226 can be determined as a sum of block sizes of previously decoded blocks 234, which are coded using the respective predetermined regular intra prediction mode of the occurrence list 222, and of block sizes of further previously decoded blocks 236, which got associated with the respective predetermined regular intra prediction mode by means of a texture analysis.

Internal settings of the ICT that is used by a neighboring block can also be taken into account for computing icw of a visited element id 224. For instance, let B be an 8×8 block coded with DIMD, where five IPMs are blended using their HoG-based DIMD weights. In this case, one might first normalize the HoG-based DIMD weights so that they sum up to 1. Then each of the five angular IPM is treated as an independent element, with the id 224 based on their IPM index, and then their normalized HoG-based DIMD weight is used as their icw. This means that visiting block B would update the cw 226 of five elements in the occurrence list 222. For example, for each of the predetermined regular intra prediction modes, indicated by id 224, of the occurrence list 222, an occurrence weight 226 can be determined depending on a weight at which the respective predetermined regular intra prediction mode contributed to a reconstruction of previously decoded blocks out of the one or more previously decoded blocks in the neighborhood 232 of the predetermined intra-predicted block, i.e. the current block 230, which used the respective predetermined regular intra prediction mode of the occurrence list 222 for decoding, or which are determined as intermediate results for decoding previously decoded blocks out of the one or more previously decoded blocks in the neighborhood 232 of the predetermined intra-predicted block, which used the respective predetermined regular intra prediction mode of the occurrence list 222 for decoding

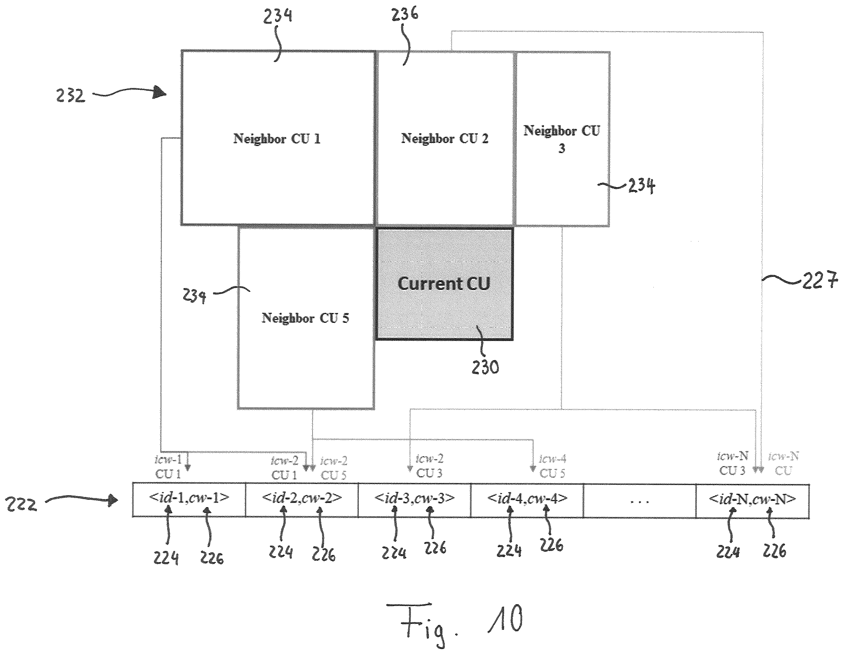

Fig. 10 illustrates an example of element weighting in an occurrence list 222.

Non-RIPM coded blocks, e.g., comprised by the further blocks 236, such as MIP, intraTMP and IBC blocks use different mechanisms to compute pixel prediction in a block. Thus, they typically do not associate with a regular IPM mode to be used in OBIC design where it is relying on regular IPM modes to operate. Same is applicable for inter predicted blocks, e.g., optionally comprised by the further blocks 236. However, one or more virtual intra prediction modes 227 (VIPMs) could be calculated for such non-RIPM blocks and/or inter-predicted blocks and the VIPMs could be used as IPMs in OBIC. When using VIPM modes 227, their occurrence weight or "*icw*" may be assigned differently than occurrence weights of blocks 234 coded using one or more Regular IPM modes. For example, smaller weight than a similar RIPM mode may be dedicated to VIPMs 227 as these modes may not fully represent the block texture direction. Virtual IPMs 227 could be calculated in different ways. Typically, a texture analysis mechanism may be applied to the samples for estimating the VIPMs of a block.

For example, a DIMD-like process may be applied to the samples of the non-RIPM block. The horizontal and vertical gradients of pixels inside the non-RIPM block are calculated with Sobel operator and the horizontal and vertical gradients of each pixel are used to derive a direction. The amplitudes of the gradient of each pixel are accumulated for the corresponding direction. One or more of the intra prediction modes corresponding to the strongest accumulation is selected as the VIPM modes 227. Then, the VIPMs 227 are used as entries, i.e. in form of an id 224, in the occurrence list 222. In other words, for a further block 236 in the neighborhood 232 of the current block 230 at least one predetermined regular intra prediction mode, e.g., as an at least one VIPM mode 227, out of the regular intra prediction modes is selected based on the texture analysis of the further block 236 by determining local gradients determined at a number of pixels of the further block 236, and determining the at least one predetermined regular intra prediction mode out of the regular intra prediction modes based on the local gradients. Similar weighting strategies, as described above, may also be applied to the VIPM modes 227 in the occurrence list 222 to obtain the occurrence weight 226.

Another example of VIPM derivation from the further blocks 236, e.g., the non-RIPM blocks and/or inter blocks, may be a template-based intra mode derivation (TIMD) approach. Using TIMD method, one or more VIPMs 227 may be estimated form the samples of the respective block. Different types of samples may be used for calculating VIPMs 227 of a non-RIPM block 236. For example, the prediction samples of the non-RIPM blocks 236 may be used for VIPM calculation. In another example, the VIPMs 227 are calculated from the reconstructed samples of the non-RIPM blocks 236. In yet another example, the template samples (template samples refer to reconstructed samples in the neighborhood 232 of the current block 230) may be used for VIPM calculation. In another example case, the VIPMs 227 may be calculated using some or all of the prediction, reconstructed and template samples of the respective non-RIPM block 236.

Similar methods as described above for the non-RIPM blocks may be also considered for calculating virtual intra prediction modes 227 in inter blocks. The texture analysis methods such as DIMD and TIMD may be applied to the motion compensated samples, and/or reconstructed samples and/or reconstructed samples of the neighborhood of an inter block for calculating VIPMs 227. One or more of the VIPMs 227 of inter blocks may be also added to the occurrence list 222 of the OBIC mode. Similar to the VIPMs 227 of non-RIPM blocks, the VIPMs 227 of inter coded blocks may be also treated differently when assigning occurrence weights 226.

When collecting IPMs for generating the occurrence list 222, the priority may be given to the regular intra predicted blocks 234 as their IPM may be considered more reliable than VIPMs 227 of further blocks 236, like non-RIPM and inter blocks. For example, if there are not sufficient regular IPM based blocks are found from the causal neighborhood 232, then the VIPMs 227 of the non-RIPM and inter blocks may be added to the occurrence list 222. The number of fusion modes for the OBIC method may be also decided based on the number of regular IPMs and VIPMs. For example, if majority of the modes in the occurrence list are VIPMs then the number of modes for fusion may be reduced.

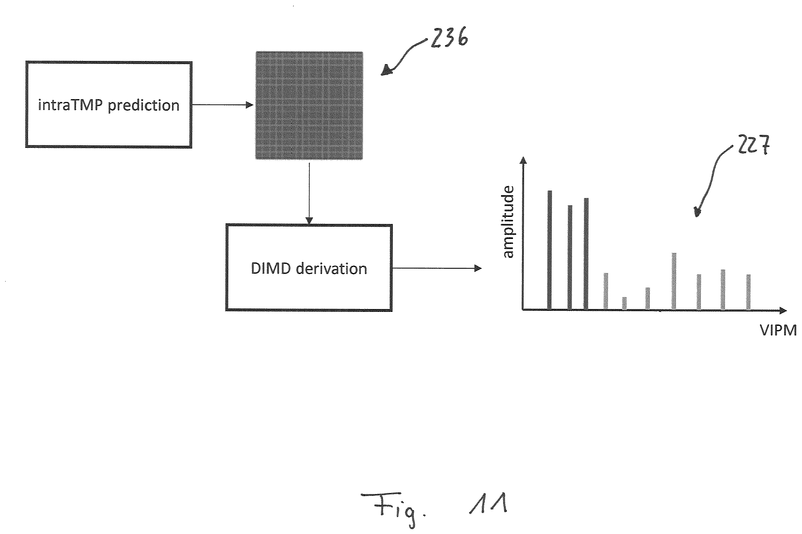

Fig. 11 shows an example of deriving VIPM modes 227 of an intraTMP block 236 from the prediction samples of the intraTMP block 236.

When collecting the occurrence list 222 of intra modes from the previously coded blocks, e.g., see blocks 234 and 236, some modes may be excluded from the occurrence list 222 in certain conditions as below:

- If an IPM is already included in most probable mode (MPM) of the current block 230,
- If an IPM is already included in one of the template-based intra coding modes such as DIMD and TIMD.

In another approach, instead of excluding an IPM from the occurrence list 222, its occurrence weight 226 may be calculated differently. For example, if an IPM is already included in the DIMD modes of the current block 230, then a smaller weight than usual may be assigned to it in the occurrence list 222 of OBIC mode. In other words, a list of intra prediction modes, e.g., a list of most probable intra prediction modes and/or a list of template-based intra coding modes, may be construed for the predetermined intra-predicted block, i.e. the current block 230, and at the construing of the occurrence list 222 any regular intra-prediction mode contained in the list of intra prediction modes may be excluded, or, for each of the predetermined regular intra prediction modes of the occurrence list 222, an occurrence weight 226 may be determined depending on whether the respective predetermined regular intra prediction mode is contained in the list of intra prediction modes or not.

When generating the most probable modes (MPM) list for a block, if the neighbor block is coded in OBIC mode, then one or more of the IPMs in the occurrence list 222 of the OBIC-coded block may be added to the MPM list of the current block 230. When adding the IPMs from the occurrence list 222, there may be certain conditions taken into account to add an IPM to the list 222. For example, an IPM from the occurrence list 222 is considered to be added to the MPM list if its occurrence weight 226 is considered to be significant enough. For example, if the ratio of the occurrence weight 226 of an IPM compared to the sum of the occurrences of all IPMs in the occurrence list 222 is larger than a certain threshold then it may be added to the MPM list, otherwise, it is considered to be less significant and thus not eligible to be included. In other words, for a current block 230 having a neighbor block that is coded in OBIC mode, the construing of the list of most probable intra prediction modes comprises selecting one or more regular intra-prediction modes for populating the list of most probable intra prediction modes by decoding, for each of the regular intra-prediction modes in the occurrence list 222, whether same is to be included into the list of most probable intra prediction modes, depending on whether the respective intra-prediction mode in the occurrence list 222 has associated therewith an occurrence weight which meets a predetermined criterion.

The intra prediction mode(s) of a block may be determined by using both OBIC and DIMD mode generation mechanisms. In one approach, one or more IPMs are determined using OBIC method and one or more IPMs are determined using DIMD method. The final prediction of a block 230 is determined by combining or fusing one or more of IPMs from the OBIC method and one or more of IPMs from the DIMD method. The fusion weights of IPMs may be fixed or they may be determined using the occurrence weights of OBIC method and amplitudes of gradients in DIMD method. In the latter case, the occurrence weights in OBIC and amplitude of gradients in DIMD may be normalized to a certain range in order to have comparable values for fusion weight calculation. For example, the occurrence weights and amplitude of gradients are mapped to the range [0 - 1] and the fusion weights of IPMs are calculated based on the normalized values.

It may be beneficial to have non-overlapping IPMs from OBIC and DIMD. For example, first set of IPMs are determined using OBIC method and the second set of IPMs are determined using DIMD method:

- If PLANAR mode is part of both OBIC-based and DIMD-based methods, then it is excluded from the DIMD modes,
- If PLANAR mode is part of both OBIC-based and DIMD-based methods, then it is excluded from the OBIC modes,
- If PLANAR mode is part of both OBIC-based and DIMD-based methods, then it is excluded from the DIMD modes and replaced by another IPM from the DIMD method that has significant amplitude of gradients,
- If PLANAR mode is part of both OBIC-based and DIMD-based methods, then it is excluded from the OBIC modes and replaced by another IPM from the OBIC method that has significant occurrence weight.

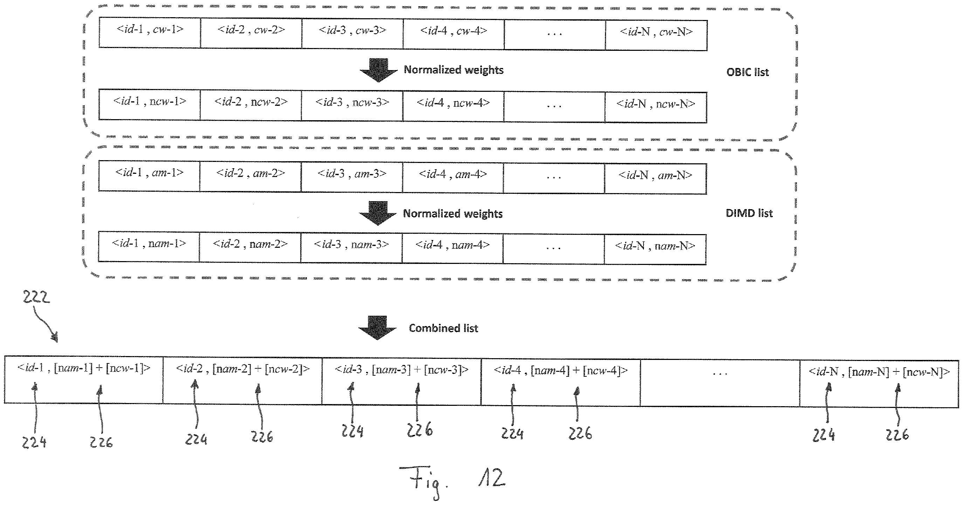

In another approach, the set of IPMs for predicting a block 230 may be determined by combining the occurrence list 222 of OBIC with Histogram of Gradients (HoG) of DIMD method. For this, the occurrence weights 226 of OBIC and amplitudes of gradients in DIMD may be normalized to a certain range before generating the combined list. For example, the occurrence weights of IPMs and amplitudes of gradients in DIMD are mapped to value range of [0 -1]. Then, a combined list of IPMs is created in such a way that the weight of each IPM is calculated based on the (normalized) occurrence weights in OBIC and (normalized) amplitudes of gradients in DIMD. After generating the combined IPM list, one or more of IPMs with significant weights from the combined list is selected and used for predicting the block. The fusion weights are calculated based on the IPMs weights in the combined list. Figure 12 shows an example of generating the combined list of IPMs from OBIC and DIMD methods. In the figure:

- *<id, cw>*: is pair of IPM and its occurrence weights from OBIC,
- *<id, ncw>*: is pair of IPM and its normalized occurrence weights from OBIC,
- *<id, am>*: is pair of IPM and its amplitude of gradients from DIMD,
- *<id, nam>*: is pair of IPM and its normalized amplitude of gradients from DIMD.

When combining the OBIC and DIMD lists, the (normalized) occurrence weights and (normalized) amplitude of gradients may be combined in different ways for example:

- The combination may be a summation of (normalized) occurrence weights and (normalized) amplitude of gradients,
- The combination may be an average of (normalized) occurrence weights and (normalized) amplitude of gradients,
- The combination may be weighted average of (normalized) occurrence weights and (normalized) amplitude of gradients where the weights may be fixed or decided based on the other factors such as block dimensions, number of neighboring blocks that are used for generating OBIC and DIMD lists, reference template size for calculating DIMD list, etc. Or the weights of weighted average may be decided in the encoder side and signaled in bitstream for example per CU, PU, CTU, picture, etc.

For example, the reconstructing of the current block 230 using the occurrence list 222 may comprise

applying a subset of predetermined regular intra prediction modes out of the occurrence list 222 to the current block 230 to obtain a partial predictor for each predetermined regular intra prediction mode of a subset of predetermined regular intra prediction modes and

subjecting the partial predictors for the subset of predetermined regular intra prediction modes to a weighted summation to yield a predictor for the current block 230, wherein each partial predictor for the subset of predetermined regular intra prediction modes is weighted using a corresponding fusion weight, and

determining the fusion weights of the partial predictors for the subset of predetermined regular intra prediction modes based on occurrence weights associated with the subset of predetermined regular intra prediction modes.

Optionally, one or more further partial predictors may be determined by

- associating the current block 230 with at least one further predetermined regular intra prediction mode out of the regular intra prediction modes by

determining local gradients determined at a number of pixels in a neighborhood 232 of the current block 230, and determining the at least one further predetermined regular intra prediction mode out of the regular intra prediction modes based on the local gradients, and

applying the at least one further predetermined regular intra prediction mode to the current block 230 to obtain a further partial predictor for each of the at least one further predetermined regular intra prediction mode

or

- motion vector based prediction;

further subjecting, to the weighted summation, regular intra prediction modes the further partial predictor for each of the at least one further predetermined regular intra prediction.

The OBIC method may combine IPM-based prediction and block vector based (BV-based) prediction for obtaining the final prediction of the block 230. For this, one or more IPMs are obtained using the IPM-based occurrence list generation of OBIC. One or more IPMs with highest occurrence weight are selected and used for generating one or more IPM-based predictions. Moreover, one or more block vectors (BVs) from the BV-based occurrence list generation of OBIC are obtained. The BV-based occurrence list consists of candidates < BV, cw> pairs where BV itself has pair of <BV-x, BV-y> for indicating horizontal and vertical displacements, respectively. The BVs and their cw weights are collected from the neighboring blocks that are associated with the BV-based predictions such as IBC and intraTMP methods. One or more BVs from the BV-based occurrence list with highest occurrence weight is then selected and used for generating BV-based prediction(s). When generating the BV-based OBIC list, an offset may be added to the horizontal and/or vertical components of the collected block vectors before or after adding them to the BV-based occurrence list. For example, the offset may be the horizontal and/or vertical distance of the top-left corner of the current block to the top-left corner of the neighbor block that the block vector is collected from. The final prediction of the block is then obtained by combining one or more of the IPM-based predictions and one or more of the BV-based predictions. The fusion weights for the predictions may be fixed or decided in the encoder side and signaled in the bitstream in various ways such as CU, PU, or picture levels. Alternatively, the fusion weights may be calculated using the occurrence weights of the IPM-based and BV-based modes. The occurrence weights of IPM-based and BV-based modes may be normalized to a certain range before calculating the fusion weights.

In another approach, IPM-based predictions may be obtained using the OBIC method while the BV-based predictions may be obtained using a different method. For example, BV-based predictions may be obtained using the existing IBC or intraTMP BV derivation methods of VVC or ECM.

In yet another approach, the BV-based predictions may be obtained using the OBIC method while the IPM-based predictions may be obtained using a different method. For example, IPM-based predictions may be obtained using the existing intra predictions mechanisms of VVC or ECM.

In one approach, a texture analysis process, such as DIMD and TIMD, may be applied to the BV-based prediction in order to derive a virtual IPM for it. If the VIPM from the BV-based prediction already exist in the IPM-based OBIC's list, then instead of using that particular IPM-based prediction, the corresponding BV-based prediction may be used. For example, the VIPM from the BV-based prediction may be equal to the Planar mode, and the planar mode is already included as one of the OBIC's IPM-based modes. In this case, it might be beneficial to replace the Planar prediction with the BV-based prediction as the BV-based prediction may be more reliable. In another approach, instead of replacing the BV-based prediction with the corresponding IPM-based prediction, one may use the combination of the BV-based prediction and IPM-based prediction.

The occurrence weights 226 of the modes 224 in OBIC may be inherited from the previously coded blocks in OBIC mode. For example, when generating the occurrence list 222 of modes from the blocks, e.g., see 234 and 236, in the causal neighborhood 232, if a block in that neighborhood 232 is already coded with OBIC method, then the occurrence weights of its modes are also inherited along with the modes. For this, it is required to store the occurrence weights and modes of an OBIC-coded block to be used for future blocks. In order to reduce the memory requirements for storing such information, only a subset of occurrence weights and modes may be stored. For example, the subset may include only the modes and occurrence weights that are actually used for predicting the block.

In one embodiment, at least one virtual intra prediction mode (VIPM) 227 is calculated for a non-regular intra prediction (non-RIPM) block and is used in the occurrence list 222 of OBIC method. The non-regular intra prediction block is referred to as a block that its prediction is obtained by a different mechanism than IPM-based intra prediction. Non-regular intra prediction block may be for example: IBC, MIP, intraTMP, EIP, CCCM, CCLM.

According to an embodiment, the VIPMs 227 of a non-regular intra prediction block may be calculated using a texture analysis method such as decoder-side intra mode derivation (DIMD) and/or template-based intra mode derivation (TIMD) methods.

According to previous embodiment, the texture analysis method for calculating VIPMs 227 of a non-regular intra prediction block may be applied to the prediction samples of the block and/or reconstructed samples of the block, and/or reconstructed samples of the neighborhood 232 of the non-RIPM block.

In one embodiment, at least one virtual intra prediction mode (VIPM) 272 is calculated for an inter prediction block and is used in the occurrence list 222 of OBIC method.

According to previous embodiment, the texture analysis method for calculating VIPMs 227 of an inter prediction block may be applied to the prediction (motion compensated) samples of the block and/or reconstructed samples of the block, and/or reconstructed samples of the neighborhood of the inter block.

According to an embodiment, the occurrence weights of VIPMs 227 of a non-RIPM block and/or an inter prediction block may be determined differently than IPM modes of a regular IPM block. For example, smaller occurrence weights may be assigned to VIPMs 227 compared to IPMs as virtual modes may not fully represent the actual texture direction.

According to an embodiment, the occurrence list 222 and occurrence weights 226 of an OBIC-coded block may be stored and used for OBIC process of another block.

According to previous embodiment, only a subset of modes 224 from the occurrence list 222 along with their occurrence weights 226 may be stored in the memory.

According to previous embodiment, the OBIC-coded block's modes and occurrence weights 226 may be inherited from a block in different channel. For example, a chroma block may inherit the OBIC modes and their occurrence weights 226 from a block in luma channel in the co-located area.

According to previous embodiment, the OBIC-coded block's modes and occurrence weights 226 may be inherited from a block in different frame. For example, a luma block may inherit the OBIC modes and their occurrence weights from a block in luma channel in the co-located area in the reference frame.

In one embodiment, the OBIC modes of an OBIC-coded block may be included in the Most Probable Mode (MPM) list of another block, coded in non-OBIC mode.

According to previous embodiment, the decision for including an OBIC mode to the MPM list may be done based on the occurrence weight 226 of that mode 224. For example, if the occurrence weight 226 of an IPM mode 224 in OBIC-coded block is smaller than a threshold then it will not be included in the MPM list.

In one embodiment, the block prediction is obtained by combining at least one IPM-based prediction, obtained by IPM-based OBIC, with at least one IPM-based prediction obtained by an IPM-based prediction other than OBIC.

According to previous embodiment, the non-OBIC IPM-based prediction may be decoder-side intra mode derivation (DIMD) or template-based intra mode derivation (TIMD) methods.

In one embodiment, the block prediction is obtained by using an at least one intra prediction mode which is derived by combining the occurrence list 222 of OBIC and histogram of gradients (HoG) based list of DIMD method.

According to previous embodiment, the occurrence weights 226 in occurrence list 222 and/or amplitude of gradients in HoG-based list may be normalized before combining them.

In an embodiment, the block prediction is obtained by combining at least one IPM-based prediction with at least one BV-based prediction.

According to previous embodiment, at least one IPM-based prediction is obtained using IPM-based OBIC method and at least one BV-based prediction is obtained using BV-based OBIC method.

In one embodiment, the block prediction is obtained by combining at least one IPM-based prediction, obtained by IPM-based OBIC, with at least one BV-based prediction obtained by an existing BV-based prediction other than OBIC.

In one embodiment, the block prediction is obtained by combining at least one BV-based prediction, obtained by BV-based OBIC, with at least one IPM-based prediction obtained by an existing IPM-based prediction other than OBIC. With reference to Fig. 8 to Fig. 12 embodiments of the present disclosure are described in other words in the following:

An embodiment relates to a method of block-based decoding of a picture 102 based on a set of intra-prediction modes including regular intra prediction modes. The regular intra prediction modes may comprise a DC intra-prediction mode, a planar intra-prediction mode and a plurality of angular intra-prediction modes. Optionally, the set of intra-prediction modes may further include non-regular intra prediction modes such as IBC, intraTMP and/or MIP.

The method comprises construing an occurrence list 222 of predetermined regular intra prediction modes for a predetermined intra-predicted block 230 based on one or more previously decoded blocks, e.g., indicated by the reference numerals 234 and 236, in a neighborhood 232 of the predetermined intra-predicted block 230. The predetermined regular intra prediction modes may represent one or more of the regular intra prediction modes included in the set of intra-prediction modes. Each of the regular intra prediction modes may be associated with a unique identifier. The predetermined regular intra prediction modes may be indicated in the occurrence list 222 using their respective identifier, i.e. the mode id 224. The one or more previously decoded blocks may comprise regular intra predicted blocks 234 and further predicted blocks 236. A regular intra predicted block 234 is associated with one of the regular intra prediction modes. A further predicted block 236 is associated with one of the non-regular intra prediction modes or with one of inter prediction modes. In other words, the further predicted blocks 236 may be regarded as previously decoded blocks, which are decoded without any of the regular intra prediction modes. The occurrence list 222 may indicate for each of the predetermined regular intra prediction modes their respective occurrence 226 within the neighborhood 232 of the predetermined intra-predicted block 230, i.e. within the one or more previously decoded blocks 234 and 236.

The method comprises reconstructing the predetermined intra-predicted block 230 using the list of predetermined regular intra prediction modes, i.e. the occurrence list 222, e.g., by selecting one of the regular intra prediction modes out of the set of intra prediction modes based on the occurrence list 222, e.g., to obtain a selected regular intra prediction mode, and using the selected regular intra prediction mode for predicting a prediction signal for the predetermined intra-predicted block 230.

According to an embodiment, the construing of the occurrence list 222 of predetermined regular intra prediction modes comprises to associate a previously decoded block, i.e. a further block 236, of the one or more previously decoded blocks in the neighborhood 232 of the predetermined intra-predicted block 230, decoded without any of the regular intra prediction modes, with at least one predetermined regular intra prediction mode out of the regular intra prediction modes based on a texture analysis of the previously decoded block, i.e. the further block 236, and populating the occurrence list 222 with the at least one predetermined regular intra prediction mode. In other words, the method comprises analyzing the texture of a previously decoded block which is not associated with one of the regular intra prediction modes and then to associate this block with one of the predetermined regular intra prediction modes based on the analysis of its texture. The predetermined regular intra prediction mode assigned to the previously decoded block, i.e. one of the further blocks 236, which is not decoded with one of the regular intra prediction modes may be regarded as a virtual intra prediction mode, since the respective block is not actually decoded with the assigned predetermined regular intra prediction mode.

Optionally, the construing the occurrence list 222 of predetermined regular intra prediction modes comprises, for each of the one or more previously decoded blocks, see 234 and 236, in the neighborhood 232 of the predetermined intra-predicted block 230, checking whether the respective previously decoded block is decoded using one or more of the regular intra prediction modes,

if the respective previously decoded block 234 is decoded using one or more of the regular intra prediction modes, populating the occurrence list 222 with one or more of the one or more regular intra prediction modes, e.g., using its identifier 224, and

if the respective previously decoded block 236 is decoded without using any of the one or more of the regular intra prediction modes,
associate the respective previously decoded block 236 of the one or more previously decoded blocks, see 234 and 236, in the neighborhood 232 of the predetermined intra-predicted block 230 with at least one predetermined regular intra prediction mode out of the regular intra prediction modes based on the texture analysis of the previously decoded block 236 and populating the occurrence list 222 with the at least one predetermined regular intra prediction mode, e.g., using its identifier 224.

Optionally, the construing the occurrence list 222 of predetermined regular intra prediction modes further comprises,

populating the occurrence list 222 in such a manner that each of the predetermined regular intra prediction modes of the occurrence list 222 differs from all other predetermined regular intra prediction modes in the occurrence list 222, i.e., no prediction mode is represented more than once within the occurrence list 222, e.g., with its unique identifier 224, and

determining, for each of the predetermined regular intra prediction modes, see 224, of the occurrence list 222, an occurrence weight 226

depending on which number of previously decoded blocks out of the one or more previously decoded blocks, see 234 and 236, in the neighborhood 232 of the predetermined intra-predicted block 230

used the respective predetermined regular intra prediction mode of the occurrence list 222 for decoding, see blocks 234, or got associated with the respective predetermined regular intra prediction mode by means of the texture analysis, see blocks 236, and/or

depending on a sum of block sizes formed over the number of previously decoded blocks out of the one or more previously decoded blocks, see 234 and 236, which

use the respective predetermined regular intra prediction mode of the occurrence list 222 for decoding or get associated with the respective predetermined regular intra prediction mode by means of the texture analysis, and/or

depending on a weight at which the respective predetermined regular intra prediction mode contributed to a reconstruction of previously decoded blocks out of the one or more previously decoded blocks, see 234 and 236, in the neighborhood 232 of the predetermined intra-predicted block 230, which used the respective predetermined regular intra prediction mode of the occurrence list 222 for decoding, or which are determined as intermediate results for decoding previously decoded blocks out of the one or more previously decoded blocks, see 234 and 236, in the neighborhood 232 of the predetermined intra-predicted block 230, which used the respective predetermined regular intra prediction mode of the occurrence list 222 for decoding, and/or

depending on, for each of the one or more previously decoded blocks, see 234 and 236, in the neighborhood 232 of the predetermined intra-predicted block 230,

whether the respective previously decoded block 234 used the respective predetermined regular intra prediction mode of the occurrence list 222 for decoding or whether the respective previously decoded block 236 got associated with the respective predetermined regular intra prediction mode by means of the texture analysis.

Optionally, the method comprises associating the previously decoded block of the one or more previously decoded blocks, see 234 and 236, in the neighborhood 232 of the predetermined intra-predicted block 230, decoded without any of the regular intra prediction modes, with at least one predetermined regular intra prediction mode out of the regular intra prediction modes based on the texture analysis of the previously decoded block by

determining local gradients determined at a number of pixels of the previously decoded block, and determining the at least one predetermined regular intra prediction mode out of the regular intra prediction modes based on the local gradients.

Optionally, the method comprises associating the previously decoded block of the one or more previously decoded blocks, see 234 and 236, in the neighborhood 232 of the predetermined intra-predicted block 230, decoded without any of the regular intra prediction modes, with at least one predetermined regular intra prediction mode out of the regular intra prediction modes based on the texture analysis of the previously decoded block by determining for each of at least one or more of the regular intra prediction modes a prediction error by applying the respective one of the at least one or more of the regular intra prediction modes to a first portion within, or neighboring, the previously decoded block so as to predict a second portion within, or neighboring, the previously decoded block and measuring the prediction error with respect to the second portion, and determining the at least one predetermined regular intra prediction mode out of the at least one or more of the regular intra prediction modes based on the prediction error.

Optionally, the method further comprises

construing a list of intra prediction modes for the predetermined intra-predicted block 230,
decoding one or more tool-selection syntax elements for the predetermined intra-prediction block from a data stream,
depending on the one or more tool-selection syntax elements, selecting one of a plurality of intra-coding tools for the predetermined intra-prediction block,
if the selected intra-coding tool is a first tool, reconstructing the predetermined intra-prediction block using an intra-prediction mode selected out of the list of intra prediction modes; and
if the selected intra-coding tool is a second tool, reconstructing the predetermined intra-predicted block 230 using the occurrence list 222 of predetermined regular intra prediction modes,
wherein the construing the occurrence list 222 of predetermined regular intra prediction modes comprises,
excluding from the occurrence list 222 any regular intra-prediction mode contained in the list of intra prediction modes, or determining, for each of the predetermined regular intra prediction modes of the occurrence list 222, an occurrence weight 226 depending on whether the respective predetermined regular intra prediction mode is contained in the list of intra prediction modes.

Optionally, the method further comprises

construing a list of most probable intra prediction modes for an subsequently decoded intra-predicted block,
decoding one or more tool-selection syntax elements for the subsequently decoded intra-prediction block from a data stream,
depending on the one or more tool-selection syntax elements, selecting one of a plurality of intra-coding tools for the subsequently decoded intra-prediction block,
if the selected intra-coding tool is a first tool, decoding from the data stream a pointer and reconstructing the predetermined intra-prediction block using an intra-prediction mode selected out of the list of most probable intra prediction modes using the pointer,

wherein the construing the list of most probable intra prediction modes for the subsequently decoded intra-predicted block comprises populating the list of most probable intra prediction modes with one or more of the regular intra-prediction modes selected from the occurrence list 222 construed for the predetermined intra-predicted block 230.

Optionally, the construing the list of most probable intra prediction modes for the subsequently decoded intra-predicted block further comprises selecting the one or more of the regular intra-prediction modes for populating the list of most probable intra prediction modes by decoding, for each of the regular intra-prediction modes in the occurrence list 222, whether same is to be included into the list of most probable intra prediction modes, depending on whether the respective intra-prediction mode in the occurrence list 222 has associated therewith an occurrence weight 226 which meets a predetermined criterion.

Optionally, the reconstructing the predetermined intra-predicted block 230 using the occurrence list 222 of predetermined regular intra prediction modes, comprises

applying a subset of predetermined regular intra prediction modes out of the occurrence list 222 of predetermined regular intra prediction modes to the predetermined intra-predicted block 230 to obtain a partial predictor for each predetermined regular intra prediction mode of the subset of predetermined regular intra prediction modes and subjecting the partial predictors for the subset of predetermined regular intra prediction modes to a weighted summation to yield a predictor for the predetermined intra-predicted block 230, wherein each partial predictor for the subset of predetermined regular intra prediction modes is weighted using a corresponding fusion weight, determining the fusion weights of the partial predictors for the subset of predetermined regular intra prediction modes based on occurrence weights 226 associated with the subset of predetermined regular intra prediction modes.

Optionally, the method further comprises determining one or more further partial predictors by

- associating the predetermined intra-predicted block 230 with at least one further predetermined regular intra prediction mode out of the regular intra prediction modes by determining local gradients determined at a number of pixels in a neighborhood 232 of the predetermined intra-predicted block 230, and determining the at least one further predetermined regular intra prediction mode out of the regular intra prediction modes based on the local gradients, and
applying the at least one further predetermined regular intra prediction mode to the predetermined intra-predicted block 230 to obtain a further partial predictor for each of the at least one further predetermined regular intra prediction mode or
- motion vector based prediction;

further subjecting, to the weighted summation, regular intra prediction modes the further partial predictor for each of the at least one further predetermined regular intra prediction.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

In even other words, a method of deriving a Decoder-side Intra Mode Derivation, DIMD, predictor for respective samples of a coding unit, CU, of a picture is described herein. The method includes selecting one or more Intra Prediction Modes, IPMs, in a template area adjacent to the CU, determining blending weights for blending at least the one or more selected IPMs, and generating the DIMD predictor by blending the one or more selected IPMs using the determined blending weights for the CU so that the blending varies over the CU .

The above description, thus, revealed the following embodiments/aspects, with details set out above being transferable onto these following embodiments/aspects

An embodiment relates to a method of block-based decoding of a picture 102, the method comprising: determining second block(s) 234, 236, wherein the second block(s) is in the neighborhood 232 of a first block 230; construing a list 222 of regular intra prediction modes, RIPM, for the first block, based on the second block(s), the construing including deriving at least one of regular intra prediction modes in the list by subjecting a certain block among the second block(s) to a texture analysis; reconstructing the first block using the list.

Optionally, the regular intra prediction modes comprise at least one of a DC and/or planar mode, a number of directional modes.

Optionally, the construing the list of regular intra prediction modes comprises, for each of the second block(s), checking whether the respective second block is decoded using a regular intra prediction mode, if the respective second block is decoded using a regular intra prediction mode, populating the list with the regular intra prediction mode, and if the respective second block is decoded without any regular intra prediction mode, deriving a virtual regular intra prediction mode by the texture analysis and populating the list with the virtual regular intra prediction mode.

Optionally, the construing the list of regular intra prediction modes comprises, populating the list in such a manner that each of the regular intra prediction modes of the list differs from all other regular intra prediction modes in the list, and determining, for each of the regular intra prediction modes of the list, an occurrence weight 226 depending on which number of second blocks out of the second block(s) in the neighborhood of the first block used the respective regular intra prediction mode of the list for decoding or resulted in the respective intra prediction mode as virtual intra prediction mode by means of the texture analysis, and/or depending on a sum of block sizes formed over the number of second blocks out of the second block(s), which used the respective regular intra prediction mode of the list for decoding or resulted in the respective intra prediction mode as virtual intra prediction mode by means of the texture analysis, and/or depending on a weight at which the respective regular intra prediction mode contributed to a reconstruction of the second block(s), and/or depending on, for each of the second block(s) in the neighborhood of the first block, whether the respective second block used the respective regular intra prediction mode of the list for decoding or whether the respective second block resulted in the respective regular intra prediction mode as virtual regular intra prediction mode by means of the texture analysis.

Optionally, the subjecting the certain block to the texture analysis comprises determining local gradients determined at a number of pixels of the certain block, and determining the at least one regular intra prediction mode for the certain block based on the local gradients.

Optionally, the subjecting the certain block to the texture analysis comprises determining for each of candidate regular intra prediction modes a prediction error by applying the respective candidate regular intra prediction mode to a first portion within, or neighboring, the certain block so as to predict a second portion within, or neighboring, the certain block and measuring the prediction error with respect to the second portion, and determining the at least one regular intra prediction mode for the certain block based on the prediction error.

Optionally, the method further comprises construing an alternative list of intra prediction modes for the first block, decoding one or more tool-selection syntax elements for the first block from a data stream, depending on the one or more tool-selection syntax elements, selecting one of a plurality of intra-coding tools for the first block, if the selected intra-coding tool is a first tool, reconstructing the first block using an intra-prediction mode selected out of the alternative list of intra prediction modes; and if the selected intra-coding tool is a second tool, reconstructing the first block using the list of regular intra prediction modes, wherein the construing the list of regular intra prediction modes comprises, excluding from the list any regular intra-prediction mode contained in the alternative list of intra prediction modes, or determining, for each of the regular intra prediction modes of the list, an occurrence weight depending on whether the respective regular intra prediction mode is contained in the alternative list of intra prediction modes.

Optionally, the method further comprises construing a list of most probable intra prediction modes for a third block, decoding one or more tool-selection syntax elements for the third block from a data stream, depending on the one or more tool-selection syntax elements, selecting one of a plurality of intra-coding tools for the third block, if the selected intra-coding tool is a first tool, decoding from the data stream a pointer and reconstructing the third block using an intra-prediction mode selected out of the list of most probable intra prediction modes using the pointer, wherein the construing the list of most probable intra prediction modes for the third block comprises populating the list of most probable intra prediction modes with one or more of the regular intra-prediction modes in the list construed for the first block.

Optionally, the construing the list of most probable intra prediction modes for the third block comprises populating the list of most probable intra prediction modes with a regular intra-prediction mode in the list conditionally depending on whether the regular intra-prediction mode in the list has associated therewith a occurrence weight which meets a predetermined criterion.

Optionally, the reconstructing the first block using the list comprises applying a subset of regular intra prediction modes out of the list of regular intra prediction modes to the first block to obtain a partial predictor for each regular intra prediction mode of the subset and subjecting the partial predictors to a weighted summation to yield a predictor for the first block, wherein each partial predictor is weighted using a corresponding fusion weight, determining the fusion weights of the partial predictors based on occurrence weights associated with the subset of regular intra prediction modes.

Optionally, the method further comprises determining one or more further partial predictors by - associating the first block with at least one further regular intra prediction mode by determining local gradients at a number of pixels in a neighborhood of the first block, and determining the at least one further regular intra prediction mode based on the local gradients., and applying the at least one further regular intra prediction mode to the first block to obtain a further partial predictor for each of the at least one further regular intra prediction mode or - motion vector based prediction; further subjecting, to the weighted summation, the further partial predictor for each of the at least one further regular intra prediction.

Another aspect relates to a method of block-based encoding of a picture, the method comprising: determining second block(s), wherein the second block(s) is in the neighborhood of a first block; construing a list of regular intra prediction modes, RIPM, for the first block, based on the second block(s), the construing including deriving at least one of regular intra prediction modes in the list by subjecting a certain block among the second block(s) to a texture analysis; encoding the block using the list.

Another aspect relates to an apparatus for block-based decoding of a picture the apparatus comprising: a second block(s) determining module configured to determine second block(s), wherein the second block(s) is in the neighborhood of a first block; a list construing module configured to construe a list of regular intra prediction modes, RIPM, for the first block, based on the second block(s), the construing including deriving at least one of regular intra prediction modes in the list by subjecting a certain block among the second block(s) to a texture analysis; a reconstruction module configured to reconstruct the block using the list.

Another aspect relates to an apparatus for block-based encoding of a picture, the apparatus comprising: a second block(s) determining module configured to determine second block(s), wherein the second block(s) is in the neighborhood of a first block; a list construing module configured to construe a list of regular intra prediction modes, RIPM, for the first block, based on the second block(s), the construing including deriving at least one of regular intra prediction modes in the list by subjecting a certain block among the second block(s) to a texture analysis; an encoding module configured to encode the block using the list.

Another aspect relates to a data stream having a picture encoded thereinto using the inventive method of block-based encoding of a picture as mentioned above.

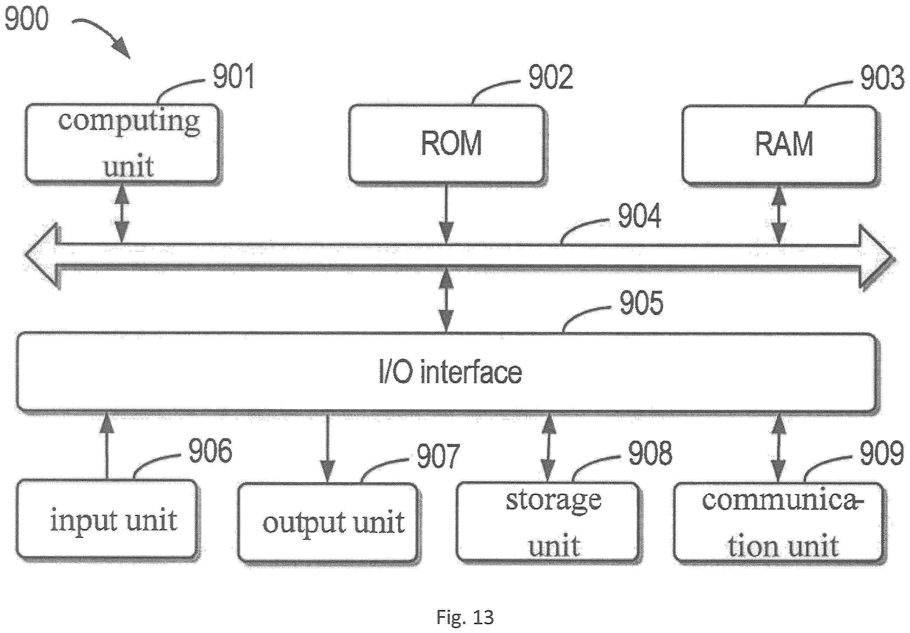

Fig. 13 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It should be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

**EP 4 625 977 A1**

The above-mentioned specific embodiments do not limit the scope of protection of the present disclosure. It should be understood by those skilled in the art that various modifications, combinations, sub-combinations and replacements may be made depending on design requirements and other factors. Any modifications, equivalent replacements, and improvements made within the principles of the present disclosure should be included within the protection scope of the present disclosure.

**References**

[1] H.264: Advanced video coding for generic audio-visual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/

**Claims**

1. A method of block-based decoding of a picture (102), the method comprising:

   determining second block(s) (234, 236), wherein the second block(s) is in the neighborhood (232) of a first block (230);
   construing a list (222) of regular intra prediction modes, RIPM, for the first block, based on the second block(s), the construing including deriving at least one of regular intra prediction modes in the list by subjecting a certain block among the second block(s) to a texture analysis;
   reconstructing the first block using the list.

2. The method of claim 1, wherein the regular intra prediction modes comprise

   at least one of a DC and/or planar mode,
   a number of directional modes.

3. The method of claim 1 or 2,

   wherein the construing the list of regular intra prediction modes comprises,
   for each of the second block(s), populating the list with the regular intra prediction mode, wherein the respective second block is decoded using a regular intra prediction mode or deriving a virtual regular intra prediction mode by the texture analysis and populating the list with the virtual regular intra prediction mode, wherein respective second block is decoded using a regular intra prediction mode.

4. The method of claim 3,

   wherein the construing the list of regular intra prediction modes comprises,
   populating the list in such a manner that each of the regular intra prediction modes of the list differs from all other regular intra prediction modes in the list, and
   determining, for the regular intra prediction modes of the list, an occurrence weight (226)

      depending on which number of second blocks out of the second block(s) in the neighborhood of the first block

         used the respective regular intra prediction mode of the list for decoding or
         resulted in the respective intra prediction mode as virtual intra prediction mode by means of the texture analysis, and/or

      depending on a sum of block sizes formed over the number of second blocks out of the second block(s), which

         used the respective regular intra prediction mode of the list for decoding or
         resulted in the respective intra prediction mode as virtual intra prediction mode by means of the texture analysis, and/or

depending on a weight at which the respective regular intra prediction mode contributed to a reconstruction of the second block(s), and/or
depending on, for each of the second block(s) in the neighborhood of the first block,

whether the respective second block used the respective regular intra prediction mode of the list for decoding or
whether the respective second block resulted in the respective regular intra prediction mode as virtual regular intra prediction mode by means of the texture analysis.

5. The method of any of claims 1 to 4,

wherein the subjecting the certain block to the texture analysis comprises
determining local gradients determined at a number of pixels of the certain block, and
determining the at least one regular intra prediction mode for the certain block based on the local gradients.

6. The method of any of claims 1 to 4, comprising

wherein the subjecting the certain block to the texture analysis comprises
determining for candidate regular intra prediction modes a prediction error by applying the respective candidate regular intra prediction mode to a first portion within, or neighboring, the certain block so as to predict a second portion within, or neighboring, the certain block and measuring the prediction error with respect to the second portion, and
determining the at least one regular intra prediction mode for the certain block based on the prediction error.

7. The method of any previous claim,

further comprising
construing an alternative list of intra prediction modes for the first block,
decoding one or more tool-selection syntax elements for the first block from a data stream,
depending on the one or more tool-selection syntax elements, selecting one of a plurality of intra-coding tools for the first block, reconstructing the first block using an intra-prediction mode selected out of the alternative list of intra prediction modes, or reconstructing the first block using the list of regular intra prediction modes,
wherein the construing the list of regular intra prediction modes comprises,
excluding from the list any regular intra-prediction mode contained in the alternative list of intra prediction modes, or
determining, for each of the regular intra prediction modes of the list, an occurrence weight
depending on whether the respective regular intra prediction mode is contained in the alternative list of intra prediction modes.

8. The method of any previous claim, further comprising

construing a list of most probable intra prediction modes for a third block,
decoding one or more tool-selection syntax elements for the third block from a data stream,
depending on the one or more tool-selection syntax elements, selecting one of a plurality of intra-coding tools for the third block,
if the selected intra-coding tool is a first tool, decoding from the data stream a pointer and reconstructing the third block using an intra-prediction mode selected out of the list of most probable intra prediction modes using the pointer,
wherein the construing the list of most probable intra prediction modes for the third block comprises
populating the list of most probable intra prediction modes with one or more of the regular intra-prediction modes in the list construed for the first block.

9. The method of claim 8,
wherein the construing the list of most probable intra prediction modes for the third block comprises
populating the list of most probable intra prediction modes with a regular intra-prediction mode in the list conditionally depending on whether the regular intra-prediction mode in the list has associated therewith a occurrence weight which meets a predetermined criterion.

10. The method of any of the previous claims, wherein the reconstructing the first block using the list comprises

applying a subset of regular intra prediction modes out of the list of regular intra prediction modes to the first block to obtain a partial predictor for each regular intra prediction mode of the subset and
subjecting the partial predictors to a weighted summation to yield a predictor for the first block, wherein each partial predictor is weighted using a corresponding fusion weight,
determining the fusion weights of the partial predictors based on occurrence weights associated with the subset of regular intra prediction modes.

11. The method of claim 10, further comprising

determining one or more further partial predictors by

- associating the first block with at least one further regular intra prediction mode by

determining local gradients at a number of pixels in a neighborhood of the first block, and
determining the at least one further regular intra prediction mode based on the local gradients., and

- applying the at least one further regular intra prediction mode to the first block to obtain a further partial predictor for each of the at least one further regular intra prediction mode or
- motion vector based prediction;

further subjecting, to the weighted summation, the further partial predictor for each of the at least one further regular intra prediction.

12. A method of block-based encoding of a picture, the method comprising:

determining second block(s), wherein the second block(s) is in the neighborhood of a first block;
construing a list of regular intra prediction modes, RIPM, for the first block, based on the second block(s), the construing including deriving at least one of regular intra prediction modes in the list by subjecting a certain block among the second block(s) to a texture analysis;
encoding the block using the list.

13. An apparatus for block-based decoding of a picture the apparatus comprising:

a second block(s) determining module configured to determine second block(s), wherein the second block(s) is in the neighborhood of a first block;
a list construing module configured to construe a list of regular intra prediction modes, RIPM, for the first block, based on the second block(s), the construing including deriving at least one of regular intra prediction modes in the list by subjecting a certain block among the second block(s) to a texture analysis;
a reconstruction module configured to reconstruct the block using the list.

14. An apparatus for block-based encoding of a picture, the apparatus comprising:

a second block(s) determining module configured to determine second block(s), wherein the second block(s) is in the neighborhood of a first block;
a list construing module configured to construe a list of regular intra prediction modes, RIPM, for the first block, based on the second block(s), the construing including deriving at least one of regular intra prediction modes in the list by subjecting a certain block among the second block(s) to a texture analysis;
an encoding module configured to encode the block using the list.

15. Data stream having a picture encoded thereinto using the method of block-based encoding of a picture according to claim 12.

FIG. 1

FIG. 2

Fig. 3

| Intra pred. mode | -14 | -13 | -12 | -11 | -10 | -9 | -8 | -7 | -6 | -5 | -4 | -3 | -2 | -1 | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|---|---|---|---|---|---|---|---|---|---|---|---|---|---|
| LFNST set index | 2 | 2 | 2 | 2 | 2 | 2 | 2 | 2 | 2 | 2 | 2 | 2 | 2 | 2 | 0 | 1 | 2 | 3 | 4 | 5 | 6 | 7 | 8 | 9 | 10 | 11 | 12 | 13 | 14 | 15 | 16 | 17 |
| Intra pred. mode | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
| LFNST set index | 18 | 19 | 20 | 21 | 22 | 23 | 24 | 25 | 26 | 27 | 28 | 29 | 30 | 31 | 32 | 33 | 34 | 33 | 32 | 31 | 30 | 29 | 28 | 27 | 26 | 25 | 24 | 23 | 22 | 21 | 20 | 19 |
| Intra pred. mode | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 | 78 | 79 | 80 | |
| LFNST set index | 18 | 17 | 16 | 15 | 14 | 13 | 12 | 11 | 10 | 9 | 8 | 7 | 6 | 5 | 4 | 3 | 2 | 2 | 2 | 2 | 2 | 2 | 2 | 2 | 2 | 2 | 2 | 2 | 2 | 2 | | |

Fig. 4

4xN/Nx4 ≥ 4

4x4 → NSPT4x4

4x8 → NSPT4x8

8x4 → NSPT8x4

4x16 → NSPT4x16

16x4 → NSPT16x4

else → DCT-II+LFNST4

8xN/Nx8 ≥ 8

8x8 → NSPT8x8

8x16 → NSPT8x16

16x8 → NSPT16x8

else → DCT-II+LFNST8

MxN (M,N ≥ 16) → DCT-II+LFNST16

Fig . 5

1100

Fig. 6

Fig. 7

Fig. 8

Legend:
- Causal neighborhood
- Tile border
- Current block
- Eligible neighbor
- Non-Eligible neighbor

Labels: 236, 234, 236, 232, 234, 234, 234, 234, Current CU, 230, 234, 234, 233

EP 4 625 977 A1

29

222

| <id-1, cw-1> | <id-2, cw-2> | <id-3, cw-3> | <id-4, cw-4> | ... | <id-N, cw-N> |

224    226      224    226      224    226      224    226      224    226

Fig. 9

Fig. 10

EP 4 625 977 A1

Fig. 11

33

| <id-1 , cw-1> | <id-2 , cw-2> | <id-3 , cw-3> | <id-4 , cw-4> | . . . | <id-N , cw-N> |

↓ Normalized weights     OBIC list

| <id-1 , ncw-1> | <id-2 , ncw-2> | <id-3 , ncw-3> | <id-4 , ncw-4> | . . . | <id-N , ncw-N> |

| <id-1 , am-1> | <id-2 , am-2> | <id-3 , am-3> | <id-4 , am-4> | . . . | <id-N , am-N> |

↓ Normalized weights     DIMD list

| <id-1 , nam-1> | <id-2 , nam-2> | <id-3 , nam-3> | <id-4 , nam-4> | . . . | <id-N , nam-N> |

222

↓ Combined list

| <id-1 , [nam-1] + [ncw-1]> | <id-2 , [nam-2] + [ncw-2]> | <id-3 , [nam-3] + [ncw-3]> | <id-4 , [nam-4] + [ncw-4]> | . . . | <id-N , [nam-N] + [ncw-N]> |

224   226    224   226    224   226    224   226    224   226

Fig. 12

Fig. 13

EP 4 625 977 A1

Europäisches
Patentamt

European
Patent Office

Office européen
des brevets

## EUROPEAN SEARCH REPORT

**Application Number**

EP 24 16 6514

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/038447 A1 (HYUNDAI MOTOR CO LTD [KR]; KIA CORP [KR]) 16 March 2023 (2023-03-16) * the whole document * | 1-15 | INV. H04N19/105 H04N19/11 H04N19/159 |
| E | & US 2024/214556 A1 (PARK SEUNG WOOK [KR] ET AL) 27 June 2024 (2024-06-27) * paragraphs [0013], [0060], [0125], [0133], [0140], [0152]; figures 5,10,11,19,20 * | 1-15 | H04N19/176 H04N19/196 H04N19/503 H04N19/593 |
| | ----- | | |
| A | YOON Y-U ET AL: "Most frequent mode for intra-mode coding in video coding", ELECTRONICS LETTERS, THE INSTITUTION OF ENGINEERING AND TECHNOLOGY, GB, vol. 55, no. 4, 21 February 2019 (2019-02-21), pages 188-190, XP006075861, ISSN: 0013-5194, DOI: 10.1049/EL.2018.7452 * the whole document * | 1-15 | |
| | ----- | | |
| A | Y-U YOON (KAU) ET AL: "CE3-related: Most Frequent Mode (MFM) for Intra Mode Coding", 12. JVET MEETING; 20181003 - 20181012; MACAO; (THE JOINT VIDEO EXPLORATION TEAM OF ISO/IEC JTC1/SC29/WG11 AND ITU-T SG.16 ), , no. JVET-L0155 1 October 2018 (2018-10-01), XP030194170, Retrieved from the Internet: URL:http://phenix.int-evry.fr/jvet/doc_end _user/documents/12_Macao/wg11/JVET-L0155-v 3.zip JVET-L0155_r2.docx [retrieved on 2018-10-01] * the whole document * | 1-15 | **TECHNICAL FIELDS SEARCHED (IPC)** H04N |
| | ----- | | |
| | -/-- | | |

The present search report has been drawn up for all claims

| Place of search | Date of completion of the search | Examiner |
|---|---|---|
| Munich | 2 August 2024 | McGrath, Simon |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                       
& : member of the same patent family, corresponding
document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 16 6514

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YOUVALARI (XIAOMI) R G ET AL: "AHG 12: Occurrence-Based Intra Coding (OBIC)", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG0141 17 January 2024 (2024-01-17), XP030314081, Retrieved from the Internet: URL:https://jvet-experts.org/doc_end_user/documents/33_Teleconference/wg11/JVET-AG0141-v2.zip JVET-AG0141_v2.docx [retrieved on 2024-01-17] * the whole document * | 1-15 | |
| A | ABDOLI (ATEME) M ET AL: "Non-CE3: Decoder-side Intra Mode Derivation with Prediction Fusion", 14. JVET MEETING; 20190319 - 20190327; GENEVA; (THE JOINT VIDEO EXPLORATION TEAM OF ISO/IEC JTC1/SC29/WG11 AND ITU-T SG.16 ), , no. JVET-N0342 18 March 2019 (2019-03-18), XP030203490, Retrieved from the Internet: URL:http://phenix.int-evry.fr/jvet/doc_end_user/documents/14_Geneva/wg11/JVET-N0342-v5.zip JVET-N0342-v5.docx [retrieved on 2019-03-18] * the whole document * | 1-15 | **TECHNICAL FIELDS SEARCHED (IPC)** |
| A | EP 3 032 830 A1 (THOMSON LICENSING [FR]) 15 June 2016 (2016-06-15) * claim 1 * | 1-15 | |

The present search report has been drawn up for all claims

| Place of search | Date of completion of the search | Examiner |
|---|---|---|
| Munich | 2 August 2024 | McGrath, Simon |

EPO FORM 1503 03.82 (P04C01)

## ANNEX TO THE EUROPEAN SEARCH REPORT
## ON EUROPEAN PATENT APPLICATION NO.

EP 24 16 6514

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2024

| Patent document cited in search report | Publication date | Patent family member(s) | | Publication date |
|---|---|---|---|---|
| WO 2023038447 A1 | 16-03-2023 | US | 2024214556 A1 | 27-06-2024 |
| | | WO | 2023038447 A1 | 16-03-2023 |
| EP 3032830 A1 | 15-06-2016 | CN | 107113438 A | 29-08-2017 |
| | | EP | 3032830 A1 | 15-06-2016 |
| | | EP | 3231178 A1 | 18-10-2017 |
| | | JP | 2018501710 A | 18-01-2018 |
| | | KR | 20170093833 A | 16-08-2017 |
| | | US | 2017366807 A1 | 21-12-2017 |
| | | WO | 2016091727 A1 | 16-06-2016 |

EPO FORM P0459

For more details about this annex : see Official Journal of the European Patent Office, No. 12/82